# EUROPEAN PATENT SPECIFICATION

(11) **EP 0 497 891 B1**
(45) Date of publication and mention of the grant of the patent: **01.10.1997**
(21) Application number: 90916991.4
(22) Date of filing: 29.10.1990
(51) Int. Cl.: H04N 9/31, H04N 5/74

(54) **TELEVISION WITH APERTURES TO MODULATE BEAM INTENSITY**
FERNSEHEN MIT BLENDEN ZUM MODULIEREN DER STRAHLINTENSITÄT
TELEVISION A OUVERTURES MODULANT L'INTENSITE DES FAISCEAUX

(30) Priority: 01.11.1989 US 429987
(43) Date of publication of application: 12.08.1992
(73) Proprietor: AURA SYSTEMS, INC., El Segundo, California 90245 (US)
(72) Inventor: UM, Gregory, Torrance, CA 90505 (US); SZILLAGYI, Andrei, Rancho Palos Verdes CA.90274 (US)
(74) Representative: Godsill, John Kenneth
(86) International application number: PCT/US90/06272
(87) International publication number: WO 91/07059

(56) References cited:
- EP-A- 0 139 991
- FR-A- 2 612 718
- US-A- 3 507 984
- US-A- 3 510 571
- US-A- 3 549 800
- US-A- 3 760 096
- US-A- 4 150 396
- US-A- 4 213 146
- US-A- 4 470 659
- US-A- 4 736 132

## Description

### BACKGROUND OF THE INVENTION

The present invention generally relates to a unique television display apparatus and, more specifically, to a television display apparatus which reflects light beams off of a mirror array and through slits in a non-reflective surface in order to modulate the intensity of the projected beams.

It is well known in the prior art to produce a television display by modulating beams of light in accordance with electrical signals received from a control system. The modulated beams of light are then converted into images by an optical scanning mechanism.

In order to create a color display, three beams of light must be modulated, one in each of the primary colors, red, green and blue. It is also well known in the art to split a white light beam into three primary colored beams. For example, in Stavis, U.S. Patent US-A-3,507, 984, an argon laser beam is passed through a prism in order to split the beam into blue and green beams. In Biedermann, U.S. Patent US-A-3,510,571, a light source is split into three primary colored beams by passing the beam through interference mirrors and filters.

The beams of light are then typically modulated by conventional light modulators. This invention discloses a optical modulation television which will not require these conventional modulators.

It is known in the art to use rotating reflective surfaces in order to provide horizontal sweep. In Biedermann, the optical system for horizontal scan includes a rotating polygonal prism. In Roth, U.S. Patent US-A-3,760,096, the optical system for horizontal sweep includes a rotating pyramidal mirror.

European Patent Application EP-A-0139991 discloses a television display apparatus comprising means for producing a light beam, reflective means disposed in the path of the light beam issuing from the producing means, the producing means including directing means for directing the light beam from the producing means onto the reflective means, clipping means disposed in the path of the light beam after reflection by the reflective means, and optical projecting means for creating an image, the reflective means comprising a plurality of reflective surface areas for reflecting a plurality of beam portions towards the clipping means, modulating means being provided for displacing the areas in dependence upon electrical signals representing pixel values of the image, so that the intensity of each clipped beam portion is commensurate with a respective pixel value.

In EP-A-0139991, the directing means comprises a Schlierin optical device, which is an optical device having reflective portions and transmitting portions. Thus, the directing means directs only a proportion of the light towards the reflected means. After reflection by the reflective means, the same Schlierin optical device functions as the clipping means such that the light reflected on to the transmitting portions of the device may pass to the optical projecting means.

The device according to EP-A-0139991 suffers from the drawback that the use of Schlierin optical devices, which reflect only a proportion of the light, and which equally transmit only a proportion of the light, give rise to losses in the system which may only be compensated for through the use of additional components.

According to the present invention, the clipping means is separate from the directing means.

The display apparatus according to the invention has improved efficiency, as substantially all of the light passing on to the directing means may be directed towards the reflective means. The reflective means may then reflect substantially all of the light to the clipping means which carries out modulation as required.

The producing means for producing a plurality of light beams of respective primary colours comprise a source for emitting white light, and means for splitting the white light into a plurality of light beams. There may be provided collimating means for collimating the white light, and the splitting means may be a defraction grating, a plurality of dichroic mirrors, or a prism.

The reflective means may comprise a plurality of reflective elements, each element comprising the plurality of reflective surface areas, each reflective element being associated with a respective one of the plurality of light beams of respective primary colours.

Each reflective surface area is preferably layered on both a flat rigid base and the modulating means, and may be attached at one end region to the flat rigid base and at the opposite end region to the modulating means. Alternatively, each reflective surface area may be attached at both ends to the modulating means, which may be a piezoelectric crystal which deforms when a voltage is applied. Each reflective surface area may be mounted on a surface of a bimorphic piezoelectric crystal layer arrangement, the bimorphic crystal arrangement having one layer which expands when a voltage is applied and one layer which contracts when a voltage is supplied, thereby bending the reflective surface areas when a voltage is applied.

The clipping means may be a surface with a plurality of apertures therein. The apertures may be a plurality of pin holes, or knife-edge apertures. The clipping means may comprise a plurality of wire strips, one of the wire strips being located within each of the plurality of apertures.

The projecting means may comprise optical scanning means, which may be a rotating polygonal mirror, the light beam portions are simultaneously reflecting off one side of the mirror. The optical scanning means may, for example, be a galvanometer mirror or a rotating holographic plate.

The display apparatus preferably comprises a projection lens for projecting the beam portions to form the image.

The present invention also provides a method for displaying pixels of an image on a screen comprising:
splitting a white light beam into a plurality of light beams of respective primary colours;
directinq the liqht beam, with directing means, towards reflective means;
reflecting the light beam with the reflective means, so as to create a plurality of beam portions, each beam portion being reflected through the use of a respective reflective surface area, the surface areas being displaced in dependence upon electrical signals representing pixel values of the image;
clipping the beam portions; and
projecting the beam portions onto a screen for converting the beam portions into an image,
characterised in that the step of clipping the beam portions is carried out by clipping means which is separate to the directing means, each beam portion being clipped so that the intensity of the clipped beam portion is commensurate with a respective pixel value conveyed by the electrical signals.

Preferably, the step of forming a light beam comprises forming a plurality of light beams of respective primary colours.

For a better understanding of the present invention and to show more clearly how it may be carried into effect, reference will now be made, by way of example, to the accompanying drawings, in which:-
Figure 1 is a diagrammatic view of a television display apparatus;
Figure 2 is a top and a side view of one reflective surface of a mirror array used in the apparatus of Figure 1;
Figure 3 is an enlarged side view corresponding to that shown in Figure 2;
Figure 4 is a diagrammatic side view of the light beam, mirror array and clipping means used in the apparatus of Figure 1; and
Figure 5 is a graph showing horizontal scan of pixels.

### Description of the Preferred Embodiment

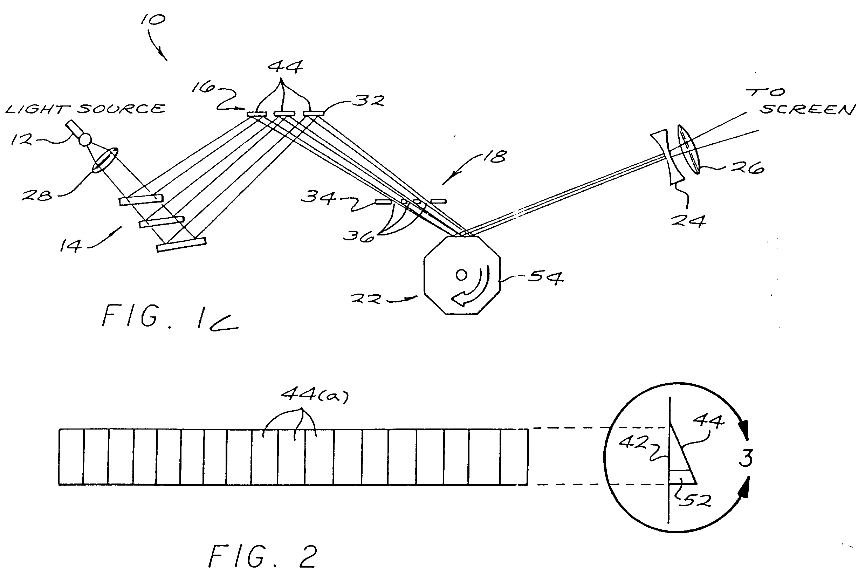

Referring now to the accompanying drawings which set forth the present invention in greater detail and in which like numerals designate like features, Fig. 1 shows a unique modulation television 10 which comprises a white light source 12, means 14 for splitting said white light into three primary beams, means 16 for spreading each of said primary beams into a bell-shaped beam, means 18 for clipping said bell-shaped beams, horizontal scanning means 22, a second collimation lens 24, and a projection lens 26. In operation, the light source 12 emits a high intensity white light which passes through a first collimation lens 28 to form a collimated light beam. The collimated light beam illuminates the splitting means 14 which breaks the white light into three primary light beams, each being one of the primary colors; red, green and blue. In the preferred embodiment, the splitting means is a plurality of dichroic mirrors 14. However, in alternative embodiments, either a diffraction grating or a prism could be used to split the collimated white light beam into three primary light beams. In another embodiment, the white light source 12, the first collimating lens 29, and the splitting means 14 could be replaced by three coherent lasers, each being one of the primary colors.

In order to modulate the beams to their desired intensity, the spreading means 16 and clipping means 18 are used in combination. In the preferred embodiment, the spreading means 16 is comprised of a mirror array 32 and the clipping means 18 is comprised of a non-reflective surface 34 with a plurality of apertures 36 therein. The plurality of apertures 36 may either be a plurality of pinholes or a plurality of knife-edged slits.

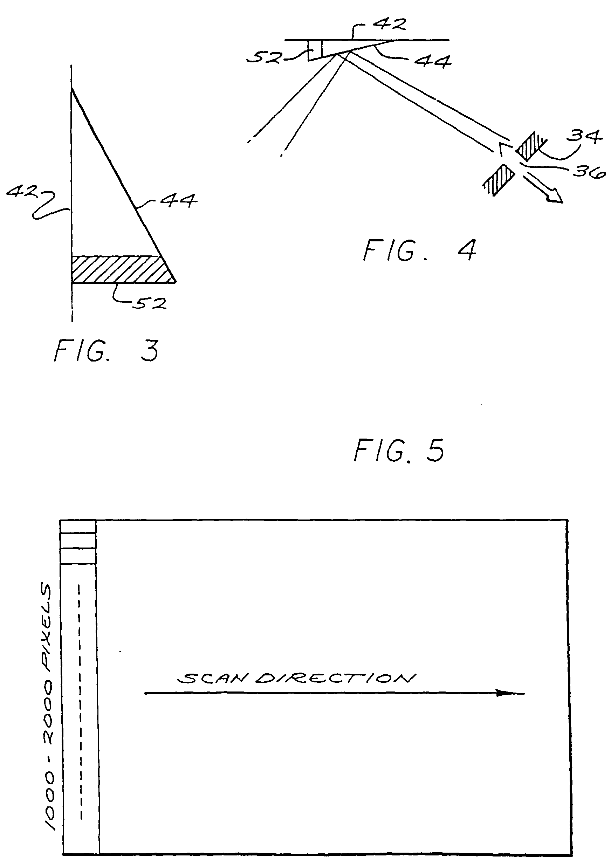

As best shown in Fig. 3, a flat rigid base 42 is used to support a reflective surface 44 of the mirror array 32. The mirror array 32 is comprised of three reflective surfaces 44, with one reflective surface 44 for each of the primary light beams. For each reflective surface 44, a piezoelectric crystal 52 is layered onto the flat rigid base 42. The reflective surface 44 is then layered on top of the piezoelectric crystal 52 and the flat rigid base 42. The reflective surface 44 is attached at one end to the flat rigid base 42, and at the opposite end to the piezoelectric crystal 52. Alternatively, the reflective surface 44 may be clamped to the flat rigid base 42. The layered flat rigid base 42, piezoelectric crystal 52, and reflective surface 44 are then divided into segments to form a plurality of disjointed reflective surfaces 44(a). Each of the disjointed reflective surfaces 44(a) comprises a pixel.

When a voltage is applied to the piezoelectric crystal 52, the crystal 52 deforms causing the reflective surface 44 to tilt. As an alternative, a constant frequency, varying voltage can be applied to the crystal 52 which causes the reflective surface 44 to vibrate with a controllable amplitude. In another alternative embodiment of the invention, the reflective surface 44 is mounted upon a bimorphic piezoelectric crystal layer. Each layer has an electrode on one end. A different voltage is applied to each crystal layer, causing one layer to expand, while the other layer contracts. As a result, the reflective surface 44 bends. The control voltage is applied to the piezoelectric material or crystal layer similar to conventional video display technology by electronic control circuitry similar to that used in a bit mapped memory.

In another embodiment of the invention, each disjointed reflective surface 44(a) is shaped with a plurality of notches located near the ends of the disjointed reflective surface 44(a). The notches will allow heat expansion of the reflective surface 44 without any resulting deformation of the reflective surface 44.

As best shown in Fig. 3, each of these primary color beams illuminate a respective segment 44(a) of each reflective surface 44 of the mirror array 32. Each reflective surface 44 is tilted, vibrated, or bent at an angle in accordance with the predetermined intensity of the pixel.

The beams reflected from the moving reflective surface 44 are spread. The reflected angle of the beam is controlled for intensity modulation. To complete the intensity modulation, the beams are then reflected toward the clipping means 18, which in the preferred embodiment is the non-reflective surface 34. When a voltage is not applied to the piezoelectric crystals 52, the reflective surfaces 44 do not vibrate, tilt, or bend, and the beams reflected off of the mirror array 32 are aimed directly at the apertures 36 of the non-reflective surface 34. If the reflected beams are aimed directly at the apertures 36, a maximum amount of light from the reflected beams will pass through the apertures 36. However, when a voltage is applied to the piezoelectric crystals 52, the reflective surfaces 44 vibrate, tilt, or bend, depending on the embodiment used, and cause the beams reflecting off of the mirror array 32 to be deflected away from the apertures 36. Therefore, only a restricted amount of light from the reflected beams pass through the plurality of apertures 36. The amount of light which passes through the plurality of apertures 36 determines the intensity of the respective pixels and colors. The apertures 36 can be pinholes or knife-edged slits.

In an alternative embodiment of the invention, the non-reflective surface 34 with the plurality of apertures 36 further includes a plurality of wire strips. Each aperture 36 contains a wire strip located within. The wire strips are located within the apertures 36 so that when no voltage is applied to the piezoelectric crystals 52, the light beams reflected off the mirror array 32 are blocked from passing through the apertures 36 by the wire strips within the apertures 36. When a voltage is applied to the piezoelectric crystals 52, the light beams reflected off the mirror array 32 are spread into bell-shaped beams. Because the beams are spread, a restricted amount of light passes around the wire strips and through the apertures 36. This amount of light which passes through each aperture 36 determines the intensity of that primary color beam.

The beams which pass through the plurality of apertures 36 of the non-reflective surface 34 then impinge upon the horizontal scanning means 22. In the preferred embodiment of the invention, the horizontal scanning means 22 is a polygonal rotating mirror 54. The beams reflect simultaneously off of one surface of the polygonal mirror 54 to provide a horizontal sweep of the column of pixels from each reflective surface 44 of the mirror arrays 32. In an alternative embodiment, the horizontal scanning means is a galvanometer mirror, also known in the art as a galvo mirror.

In another embodiment, the horizontal scanning means is a rotating holographic plate.

In another alternative embodiment, the scanning is accomplished by aligning the reflective surfaces 44 of the mirror array 32 and scanning the row of pixels on each reflective surface 44 vertically.

In an alternative embodiment, the horizontal scanning means 22 is eliminated by the use of a two-dimensional mirror array. The two-dimensional mirror array is formed by cascading a plurality of reflective surfaces 44, then dividing the reflective surfaces 44 into segments both horizontally and vertically, thereby forming a grid of segments. The apertures 36 are also formed in a two-dimensional grid on a non-reflective surface. One two-dimensional reflective surface is required for each primary light beam reflected off the splitting means 14. The use of the two-dimensional mirror array, and two-dimensional apertures grid covers the whole image field instantaneously, thereby eliminating the need for the horizontal scanning means 22.

The scanned beams are then passed through a second collimation lens 24 and a projection lens 26 in order to project an image upon the screen.

## Claims

1. A television display apparatus comprising means for producing a plurality of light beams, of respective primary colours, the producing means including a source (12) for emitting white light and means (14) for splitting the white light into the plurality of light beams of respective primary colours, reflective means (16) disposed in the path of the light beams issuing from the producing means, the producing means including directing means (14) for directing the light beams from the producing means onto the reflective means, clipping means (18) disposed in the path of the light beams after reflection by the reflective means, and optical projecting means (22,24,26) for creating an image, the reflective means (18) comprising a plurality of reflective surface areas (44) for reflecting a plurality of beam portions towards the clipping means (18), modulating means being provided for displacing the areas (44) in dependence upon electrical signals representing pixel values of the image, so that the intensity of each clipped beam portion is commensurate with a respective pixel value, characterised in that said clipping means is separate from said directing means.

2. A television display apparatus as claimed in claim 1 wherein there is provided collimating means (28) for collimating the white light.

3. A television display apparatus as claimed in claim 2, wherein said splitting means is a diffraction grating.

4. A television display apparatus as claimed in claim 2, wherein the splitting means is a plurality of dichroic mirrors.

5. A television display apparatus as claimed in claim 2, wherein the splitting means is a prism.

6. A television display apparatus as claimed in any one of the preceding claims, wherein the reflective means (16) comprises a plurality of reflective elements, each element comprising the plurality of reflective surface areas (44), each reflective element being associated with a respective one of the plurality of light beams of respective primary colours.

7. A television display apparatus as claimed in any one of the preceding claims wherein each reflective surface area is layered on both a flat rigid base and the modulating means.

8. A television display apparatus as claimed in claim 7 wherein each reflective surface area is attached at one end region to said flat rigid base and at the opposite end region to said modulating means.

9. A television display apparatus as claimed in any one of claims 1 to 6, wherein each reflective surface area is attached at both ends to said modulating means.

10. A television display apparatus as claimed in any one of the preceding claims wherein said modulating means is a piezoelectric crystal which deforms when a voltage is applied.

11. A television display apparatus as claimed in claim 10 wherein each reflective surface area is mounted on a surface of a bimorphic piezoelectric crystal layer arrangement, said bimorphic crystal layer arrangement having one layer which expands when a voltage is applied and one layer which contracts when a voltage is applied, thereby bending said reflective surface areas when a voltage is applied.

12. A television display apparatus as claimed in any one of the preceding claims wherein said clipping means (18) is a surface with a plurality of apertures (36) therein.

13. A television display apparatus as claimed in claim 12 wherein said plurality of apertures (36) is a plurality of pinholes.

14. A television display apparatus as claimed in claim 12 wherein said plurality of apertures (36) is a plurality of knife-edged apertures.

15. A television display apparatus as claimed in claim 12, 13 or 14, wherein said clipping means (18) comprises a plurality of wire strips, one of said wire strips being located within each of said plurality of apertures (36).

16. A television display apparatus as claimed in any one of the preceding claims wherein the projecting means comprises optical scanning means.

17. A television display apparatus as claimed in claim 16, wherein the scanning means is a rotating polygonal mirror, the light beam portions simultaneously reflecting off one side of said polygonal mirror.

18. A television display apparatus as claimed in claim 17, wherein said optical scanning means is a galvanometer mirror.

19. A television display apparatus as claimed in claim 17, wherein said optical scanning means is a rotating holographic plate.

20. A television display apparatus as claimed in any one of the preceding claims and comprising a projection lens (26) for projecting the beam portions to form the image.

21. A method for displaying pixels of an image on a screen comprising:
splitting a white light beam into a plurality of light beams of respective primary colours;
directing the light beam, with directing means, towards reflective means;
reflecting the light beam with the reflective means, so as to create a plurality of beam portions, each beam portion being reflected through the use of a respective reflective surface area, the surface areas being displaced in dependence upon electrical signals representing pixel values of the image;
clipping the beam portions; and
projecting the beam portions onto a screen for converting the beam portions into an image,
characterised in that the step of clipping the beam portions is carried out by clipping means which is separate to the directing means, each beam portion being clipped so that the intensity of the clipped beam portion is commensurate with a respective pixel value conveyed by the electrical signals.

## Patentansprüche

1. Fernsehwiedergabevorrichtung, die eine Einrichtung zum Erzeugen einer Anzahl Lichtstrahlen mit entsprechenden Grundfarben enthält, wobei die Erzeugungseinrichtung umfaßt:
eine Quelle (12) zum Aussenden von weißem Licht und eine Einrichtung (14) zum Aufspalten des weißen Lichts in die Anzahl Lichtstrahlen mit den entsprechenden Grundfarben;
eine Reflexionseinrichtung (16), die im Ausbreitungsweg der Lichtstrahlen angeordnet ist, die aus der Erzeugungseinrichtung austreten, wobei die Erzeugungseinrichtung eine Leiteinrichtung (14) zum Lenken der Lichtstrahlen von der Erzeugungseinrichtung auf die Reflexionseinrichtung enthält;
eine Blendeneinrichtung (18), die im Ausbreitungsweg der Lichtstrahlen nach der Reflexion an der Reflexionseinrichtung angeordnet ist; und
optische Projektionseinrichtungen (22, 24, 26) zum Erzeugen eines Bilds, wobei die Reflexionseinrichtung (16) eine Anzahl reflektierender Oberflächenbereiche (44) umfaßt, um eine Anzahl Strahlanteile zur Blendeneinrichtung (18) zu reflektieren, und eine Moduliereinrichtung bereitgestellt ist, um die Bereiche (44) abhängig von elektrischen Signalen zu verschieben, die Pixelwerte des Bilds darstellen, so daß die Intensität eines jeden aus der Blendeneinrichtung austretenden Strahlanteils einem jeweiligen Pixelwert entspricht,
dadurch gekennzeichnet, daß die Blendeneinrichtung von der Leiteinrichtung getrennt ist.

2. Fernsehwiedergabevorrichtung nach Anspruch 1, in der eine Kollimatoreinrichtung (28) bereitgestellt ist, um das weiße Licht parallel auszurichten.

3. Fernsehwiedergabevorrichtung nach Anspruch 2, wobei die Aufspalteinrichtung ein Beugungsgitter ist.

4. Fernsehwiedergabevorrichtung nach Anspruch 2, wobei die Aufspalteinrichtung aus einer Anzahl dichroitischer Spiegel besteht.

5. Fernsehwiedergabevorrichtung nach Anspruch 2, wobei die Aufspalteinrichtung ein Prisma ist.

6. Fernsehwiedergabevorrichtung nach irgendeinem der vorhergehenden Ansprüche, wobei die Reflexionseinrichtung (16) eine Anzahl Reflexionselemente enthält, jedes Element die Anzahl reflektierender Oberflächenbereiche (44) umfaßt und jedes Reflexionselement zu einem entsprechenden Lichtstrahl aus der Anzahl Lichtstrahlen mit den jeweiligen Grundfarben gehört.

7. Fernsehwiedergabevorrichtung nach irgendeinem der vorhergehenden Ansprüche, wobei jeder reflektierende Oberflächenbereich sowohl auf einem steifen ebenen Grundteil als auch auf der Moduliereinrichtung eine Schicht bildet.

8. Fernsehwiedergabevorrichtung nach Anspruch 7, wobei jeder reflektierende Oberflächenbereich an einem Endbereich mit dem steifen ebenen Grundteil und am gegenüberliegenden Endbereich mit der Moduliereinrichtung verbunden ist.

9. Fernsehwiedergabevorrichtung nach irgendeinem der Ansprüche 1 bis 6, wobei jeder reflektierende Oberflächenbereich an beiden Enden an der Moduliereinrichtung befestigt ist.

10. Fernsehwiedergabevorrichtung nach irgendeinem der vorhergehenden Ansprüche, wobei die Moduliereinrichtung ein piezoelektrischer Kristall ist, der sich verformt, wenn eine Spannung anliegt.

11. Fernsehwiedergabevorrichtung nach Anspruch 10, wobei jeder reflektierende Oberflächenbereich auf einer Fläche einer piezoelektrischen Zweielement-Kristallschichtanordnung befestigt ist und die Zweielement-Kristallschichtanordnung eine Schicht aufweist, die sich ausdehnt, wenn eine Spannung angelegt wird, und eine Schicht, die sich zusammenzieht, wenn eine Spannung angelegt wird, wodurch sich die reflektierenden Oberflächenbereiche biegen, wenn eine Spannung angelegt wird.

12. Fernsehwiedergabevorrichtung nach irgendeinem der vorhergehenden Ansprüche, wobei die Blendeneinrichtung (18) eine Fläche ist, in der sich zahlreiche Öffnungen (36) befinden.

13. Fernsehwiedergabevorrichtung nach Anspruch 12, wobei die zahlreichen Öffnungen (36) zahlreiche feine Rundlöcher sind.

14. Fernsehwiedergabevorrichtung nach Anspruch 12, wobei die zahlreichen Öffnungen (36) zahlreiche schmale längliche Schlitze sind.

15. Fernsehwiedergabevorrichtung nach Anspruch 12, 13 oder 14, wobei die Blendeneinrichtung (18) eine Anzahl Drahtstreifen umfaßt und einer der Drahtstreifen innerhalb einer jeden Öffnung der zahlreichen Öffnungen (36) angeordnet ist.

16. Fernsehwiedergabevorrichtung nach irgendeinem der vorhergehenden Ansprüche, wobei die Projektionseinrichtung optische Abtasteinrichtungen enthält.

17. Fernsehwiedergabevorrichtung nach Anspruch 16, wobei die Abtasteinrichtung ein sich drehender vieleckiger Spiegel ist und die Lichtstrahlanteile gleichzeitig von einer Seite des vieleckigen Spiegels reflektiert werden.

18. Fernsehwiedergabevorrichtung nach Anspruch 17, wobei die optische Abtasteinrichtung ein Galvanometerspiegel ist.

19. Fernsehwiedergabevorrichtung nach Anspruch 17, wobei die optische Abtasteinrichtung eine sich drehende holographische Platte ist.

20. Fernsehwiedergabevorrichtung nach irgendeinem der vorhergehenden Ansprüche, zudem umfassend eine Projektionslinse (26) zum Projizieren der Strahlanteile, die das Bild aufbauen.

21. Verfahren zum Darstellen der Pixel eines Bilds auf einem Bildschirm, umfassend:
Aufspalten eines weißen Lichtstrahls in eine Anzahl Lichtstrahlen mit entsprechenden Grundfarben;
Lenken des Lichtstrahls mit einer Leiteinrichtung auf eine Reflexionseinrichtung;
Reflektieren des Lichtstrahls mit der Reflexionseinrichtung, um eine Anzahl Strahlanteile zu erzeugen, wobei jeder Strahlanteil durch den Gebrauch eines entsprechenden reflektierenden Oberflächenbereichs reflektiert wird und die Oberflächenbereiche abhängig von elektrischen Signalen verschoben werden, die die Pixelwerte des Bilds darstellen;
Leiten der Strahlanteile durch die Blendeneinrichtung; und
Projizieren der Strahlanteile auf einen Bildschirm, um die Strahlanteile in ein Bild umzusetzen,
dadurch gekennzeichnet, daß der Schritt des Leitens der Strahlanteile durch die Blendeneinrichtung mit einer Blendeneinrichtung ausgeführt wird, die von der Leiteinrichtung getrennt ist, und jeder Strahlanteil so durch die Blendeneinrichtung geleitet wird, daß die Intensität des durch die Blendeneinrichtung geleiteten Strahlanteils einem jeweiligen Pixelwert entspricht, den die elektrischen Signale übertragen.

## Revendications

1. Un appareil de télévision comprenant des moyens pour produire un ensemble de faisceaux de lumière de couleurs primaires respectives, les moyens de production comprenant une source (12) pour émettre de la lumière blanche et des moyens (14) pour diviser la lumière blanche afin de donner l'ensemble des faisceaux de lumière de couleurs primaires respectives, des moyens réfléchissants (16) disposés dans le trajet des faisceaux de lumière sortant des moyens de production, les moyens de production comprenant des moyens directeurs (14) pour diriger les faisceaux de lumière provenant des moyens de production et les amener sur les moyens réfléchissants, des moyens limiteurs (18) disposés dans le trajet des faisceaux de lumière après réflexion par les moyens réfléchissants, et des moyens optiques de projection (22, 24, 26) pour créer une image, les moyens réfléchissants (16) comprenant un ensemble de surfaces réfléchissantes (44) pour réfléchir un ensemble de parties de faisceaux en direction des moyens limiteurs (18), des moyens de modulation étant prévus pour déplacer les surfaces (44) en dépendance de signaux électriques représentant des valeurs des pixels de l'image, de sorte que l'intensité de chaque partie de faisceaux ainsi limitée est proportionnelle à une valeur de pixel respectif, caractérisé en ce que lesdits moyens limiteurs sont distincts desdits moyens directeurs.

2. Un appareil de télévision tel que revendiqué à la revendication 1, dans lequel on prévoit des moyens de collimation (28) pour collimater la lumière blanche.

3. Un appareil de télévision tel que revendiqué à la revendication 2, dans lequel lesdits moyens diviseurs sont constitués par un réseau de diffraction.

4. Un appareil de télévision tel que revendiqué à la revendication 2, dans lequel lesdits moyens diviseurs sont constitués par un ensemble de miroirs dichroïques.

5. Un appareil de télévision tel que revendiqué à la revendication 2, dans lequel les moyens diviseurs sont constitués par un prisme.

6. Un appareil de télévision tel que revendiqué dans une quelconque des revendications précédentes, dans lequel les moyens réfléchissants (16) comprennent un ensemble d'éléments réfléchissants, chaque élément comprenant un ensemble de surfaces réfléchissantes (44), chaque élément réfléchissant étant associé à un faisceau de lumière respectif parmi l'ensemble des faisceaux de lumière de couleurs primaires respectives.

7. Un appareil de télévision tel que revendiqué dans une quelconque des revendications précédentes, dans lequel chaque surface réfléchissante est disposée en couche à la fois sur une base rigide plane et sur les moyens de modulation.

8. Un appareil de télévision tel que revendiqué à la revendication 7, dans lequel chaque surface réfléchissante est fixée, au niveau d'une première région d'extrémité, à ladite base plane rigide et, au niveau de la région d'extrémité opposée, auxdits moyens de modulation.

9. Un appareil de télévision tel que revendiqué dans une quelconque des revendications 1 à 6, dans lequel chaque surface réfléchissante est fixée, au niveau de ses deux extrémités, auxdits moyens de modulation.

10. Un appareil de télévision tel que revendiqué dans une quelconque des revendications précédentes, dans lequel lesdits moyens de modulation sont constitués par un cristal piézo-électrique qui se déforme lorsqu'une tension lui est appliquée.

11. Un appareil de télévision tel que revendiqué à la revendication 10, dans lequel chaque surface réfléchissante est montée sur une surface d'une disposition de couches cristallines piézo-électriques bimorphes, ladite disposition de couches cristallines bimorphes présentant une couche qui se dilate lorsqu'une tension lui est appliquée et une couche qui se contracte lorsqu'une tension lui est appliquée, de manière ainsi à couder lesdites surfaces réfléchissantes lorsqu'une tension leur est appliquée.

12. Un appareil de télévision tel que revendiqué dans une quelconque des revendications précédentes, dans lequel lesdits moyens limiteurs (18) sont constitués par une surface présentant un ensemble d'ouvertures (36).

13. Un appareil de télévision tel que revendiqué à la revendication 12, dans lequel ledit ensemble d'ouvertures (36) est constitué par un ensemble de trous d'épingle.

14. Un appareil de télévision tel que revendiqué à la revendication 12, dans lequel ledit ensemble d'ouvertures (36) est constitué par un ensemble d'ouvertures à bord aiguisé.

15. Un appareil de télévision tel que revendiqué à la revendication 12, 13 ou 14, dans lequel lesdits moyens limiteurs (18) comprennent un ensemble de bandes de fils, l'une desdites bandes de fils étant placée à l'intérieur de chaque ouverture dudit ensemble d'ouvertures (36).

16. Un appareil de télévision tel que revendiqué dans une quelconque des revendications précédentes, dans lequel les moyens de projection comprennent des moyens optiques de balayage.

17. Un appareil de télévision tel que revendiqué à la revendication 16, dans lequel les moyens de balayage sont constitués par un miroir polygonal tournant, les parties de faisceaux de lumière se réfléchissant simultanément sur une face dudit miroir polygonal.

18. Un appareil de télévision tel que revendiqué à la revendication 17, dans lequel lesdits moyens optiques de balayage sont constitués par un miroir galvanométrique.

19. Un appareil de télévision tel que revendiqué à la revendication 17, dans lequel lesdits moyens optiques de balayage sont constitués par une plaque holographique tournante.

20. Un appareil de télévision tel que revendiqué dans une quelconque des revendications précédentes, et comprenant une lentille de projection (26) pour projeter les parties de faisceaux afin de former l'image.

21. Un procédé pour afficher les pixels d'une image sur un écran comprenant les opérations consistant à :
diviser un faisceau de lumière blanche en un ensemble de faisceaux de lumière de couleurs primaires respectives ;
diriger le faisceau de lumière, à l'aide de moyens directeurs, vers des moyens réfléchissants ;
réfléchir le faisceau de lumière à l'aide des moyens réfléchissants, de manière à créer un ensemble de parties de faisceau, chaque partie de faisceau étant réfléchie par l'intermédiaire de l'utilisation d'une surface réfléchissante respective, les surfaces étant déplacées en dépendance de signaux électriques représentant des valeurs de pixels de l'image ;
limiter les parties de faisceau ; et
projeter les parties de faisceau sur un écran pour convertir les parties de faisceau en une image,
caractérisé en ce que l'opération de limitation des parties de faisceau est effectuée par des moyens de limitation qui sont distincts des moyens directeurs, chaque partie de faisceau étant limitée de telle manière que l'intensité de la partie de faisceau ainsi limitée soit proportionnelle à la valeur d'un pixel respectif transportée par les signaux électriques.
